**Europäisches Patentamt**

**European Patent Office**

**Office européen des brevets**

(19)

(11) Veröffentlichungsnummer: **0 100 442**
**B1**

(12)

# EUROPÄISCHE PATENTSCHRIFT

(45) Veröffentlichungstag der Patentschrift:
**08.10.86**

(21) Anmeldenummer: **83106409.2**

(22) Anmeldetag: **01.07.83**

(51) Int. Cl.⁴: **G 01 M 11/02**

(54) **Verfahren und Vorrichtung zur Prüfüng von Linsen.**

(30) Priorität: **07.07.82 DE 3225343**

(43) Veröffentlichungstag der Anmeldung:
**15.02.84 Patentblatt 84/7**

(45) Bekanntmachung des Hinweises auf die Patenterteilung:
**08.10.86 Patentblatt 86/41**

(84) Benannte Vertragsstaaten:
**DE FR GB**

(56) Entgegenhaltungen:
**US - A - 4 213 701**

(73) Patentinhaber: **Firma Carl Zeiss, D-7920 Heidenheim (Brenz) (DE)**

(84) Benannte Vertragsstaaten: **DE FR**

(73) Patentinhaber: **CARL-ZEISS-STIFTUNG trading as CARL ZEISS, D-7920 Heidenheim (Brenz) (DE)**

(84) Benannte Vertragsstaaten: **GB**

(72) Erfinder: **Grimm, Wolfgang, Dr., Max-Beckmann-Strasse 59, D-7920 Heidenheim (Brenz) (DE)**
Erfinder: **Schürle, Hermann, Bischof-Fischer-Strasse 110, D-7080 Aalen (DE)**

## Beschreibung

Die vorliegende Erfindung betrifft ein Verfahren und eine Vorrichtung zur Prüfung von Linsen mit örtlich ungleichmässig verteilten Flächenbrechwerten.

In der Augenoptik finden in zunehmendem Umfang Gleitsicht-Brillenlinsen Verwendung, d.h. Brillenlinsen, die mehrere örtlich verschiedene Flächenbrechwerte aufweisen, wobei der Übergang zwischen den verschiedenen Bereichen kontinuierlich ist. Bei solchen, beispielsweise aus der EP-A-0 039 497 bekannten Linsen weicht zumindest eine ihrer Flächen von der rotationssymetrischen Gestalt ab, d.h. sie ist asphärisch.

Bei der Fertigung sind Linsen, insbesondere auch Brillenlinsen dahingehend zu überprüfen, ob und wie gut sie den oder die geforderten Flächenbrechwert(e) auweisen. Eine solche Prüfung erfolgt bei sphärischen Linsen meist interferentiell. Dazu wird auf die zu prüfende Fläche ein Probeglas mit dem Betrage nach gleicher, jedoch mit entgegengesetztem Vorzeichen versehener Krümmung gelegt und es werden die in der sehr dünnen Luftschicht zwischen den beiden Flächen entstehenden Interferenzerscheinungen beobachtet.

Es ist ohne weiteres verständlich, dass eine solche Qualitätsprüfung bei asphärischen Linsen kaum durchführbar und zudem sehr teuer ist.

Ein Ausmessen der zu prüfenden Fläche von Punkt zu Punkt mittels eines Fühlers führt zwar zu genauen Ergebnissen ist jedoch so umständlich und teuer, dass es in der Fertigungskontrolle nicht einsetzbar ist.

Eine an sich bekannte interferometrische Prüfung mit Hilfe künstlich hergestellter Hologramme ist zwar möglich, jedoch teuer und justierempfindlich und deshalb in der Fertigungskontrolle nicht einsetzbar.

Es ist nun die Aufgabe der vorliegenden Erfindung, ein Verfahren und eine Vorrichtung zur Prüfung von Linsen mit örtlich ungleichmässigen Flächenbrechwerten zu schaffen, das einfach ausführbar ist und sehr schnell eine Aussage darüber erlaubt, wo und wie die Flächenbrechwerte des Prüflings vom jeweiligen Sollflächenbrechwert abweichen.

Diese Aufgabe wird nach dem kennzeichnenden Teil des Anspruchs 1 dadurch gelöst, dass zunächst über einen, eine Musterlinse enthaltenden Strahlengang ein Bild einer Testfigur erzeugt und fotographisch festgehalten wird, dass danach dieses Testbild von dessen der Testfigur abgewandten Seite aus durchleuchtet und über den gleichen Strahlengang, in dem anstelle der Musterlinse die zu prüfende Linse angeordnet ist, auf die Testfigur abgebildet wird, und dass schliesslich aus der Abweichung zwischen der Testfigur und der Abbildung des Testbildes die örtliche Verteilung der Abweichung der Flächenbrechwerte des Prüflings vom jeweiligen Sollflächenbrechwert bestimmt wird.

Bei diesem Verfahren wird also eine an sich beliebig gestaltete Testfigur unter Einschaltung der Musterlinse, d.h. der Linse, welche die geforderten Sollflächenbrechwerte aufweist in eine Ebene abgebildet und es wird das dort entstehende Testbild fotographisch festgehalten. Wird nun mittels derselben, jedoch in umgekehrter Richtung durchlaufenen Optik das Testbild wieder auf die Testfigur abgebildet, so lässt sich keine Abweichung erkennen, solange die Musterlinse im Strahlengang ist. Wird dagegen die Musterlinse durch die zu prüfende Linse ersetzt, so weicht das mit ihrer Hilfe abgebildete Testbild von der Testfigur entsprechend den Fehlern des Prüflings ab. Es lässt sich auf einen Blick erkennen, dass und wo eine solche Abweichung vorliegt.

Es ist zweckmässig, das Testbild als Negativ der Testfigur festzuhalten. In diesem Fall entsteht also bei der Prüfung eine gleichmässig geschwärzte Fläche in der Testfigur-Ebene, solange der Prüfling keine Fehler aufweist. Ist dagegen der Prüfling fehlerhaft, so treten in der Testfigur-Ebene weisse Säume auf.

Unter Umständen kann es auch zweckmässig sein, das Negativbild zu färben, so dass sich also Fehler des Prüflings in der Testbild-Ebene durch Farbsäume kennzeichnen.

Besonders vorteilhaft ist es, die Testfigur so auszubilden, dass ihre Strichstärke der Toleranzabweichung entspricht. Diese Toleranzabweichung kann beispielsweise zu 1/8 dpt. festgelegt werden, was in einem ausgeführten Beispiel zu Strichstärken von 0,7 mm der Testfigur führt.

Als Testbild kann beispielsweise ein Muster gleichmässig und parallel nebeneinander liegender Striche, d.h. ein Gitter verwendet werden. In diesem Fall sind die durch Fehler des Prüflings verursachten Lichtsäume besonders gut zu beobachten.

Es ist auch möglich, das Verfahren so auszubilden, dass nach Erzeugung des Testbildes in der Testbild-Ebene die zu seiner Erzeugung verwendete Original-Testfigur gegen eine solche ausgetauscht wird, die anstelle der Striche helle Streifen enthält, welche von dunklen Strichen gesäumt sind. Bei der eigentlichen Prüfung wird also eine Linie des Testbildes zwischen die Striche der neuen Testfigur abgebildet. Auch hier treten irgendwelche durch Fehler verursachte Lichtsäume besonders deutlich hervor.

Die Vorrichtung zur Prüfung von Linsen mit örtlich ungleichmässig verteilten Flächenbrechwerten, die zur Ausführung des geschilderten Testverfahrens dient, zeichnet sich aus durch ein Hintereinanderschalten folgender Elemente: einer zur Halterung der Testfigur dienenden Fläche, einer zur Abbildung der Testfigur in eine Bildebene dienenden Optik, welche eine Auflage zur Halterung der Musterlinse bzw. der zu prüfenden Linse und ein Objektiv mit vorgeschalteter Blende kleiner Apertur enthält und eines Beleuchtungssystems zur Durchleuchtung der Bildebene von der Testfigur abgewandten Seiten aus. Die im Abbildungsstrahlengang vorgesehene Blende kleiner Apertur dient zur Kompensation grosser Brechwertunterschiede des Prüflings.

Das Testverfahren nach der Erfindung findet besonders vorteilhaft Verwendung zur Prüfung von Gleitsicht-Brillenlinsen. Bei dieser Verwendung ist es zweckmässig, die Testfigur in einer Ebene anzuordnen, welche zur optischen Achse des Strahlenganges geneigt verläuft und diese Neigung verstellbar zu machen. Dadurch lässt sich in gewissem Umfang die Brechwertverteilung über die Gleitsichtfläche kompensieren.

Die Erfindung wird im folgenden anhand der Figuren 1–4 der beigefügten Zeichnungen näher erläutert. Im einzelnen zeigen:

Fig. 1 ein Ausführungsbeispiel einer Vorrichtung nach der Erfindung;

Fig. 2a eine Testfigur, und

Fig. 2b das von dieser Testfigur unter Einschaltung einer Gleitsicht-Brillenlinse in den abbildenden Strahlengang erzeugte Testbild;

Fig. 3 ein anderes Ausführungsbeispiel der Test-Vorrichtung;

Fig. 4 ein zweites Ausführungsbeispiel einer Testfigur, wie sie beispielsweise zur Prüfung von Gleitsicht-Brillenlinsen Verwendung findet.

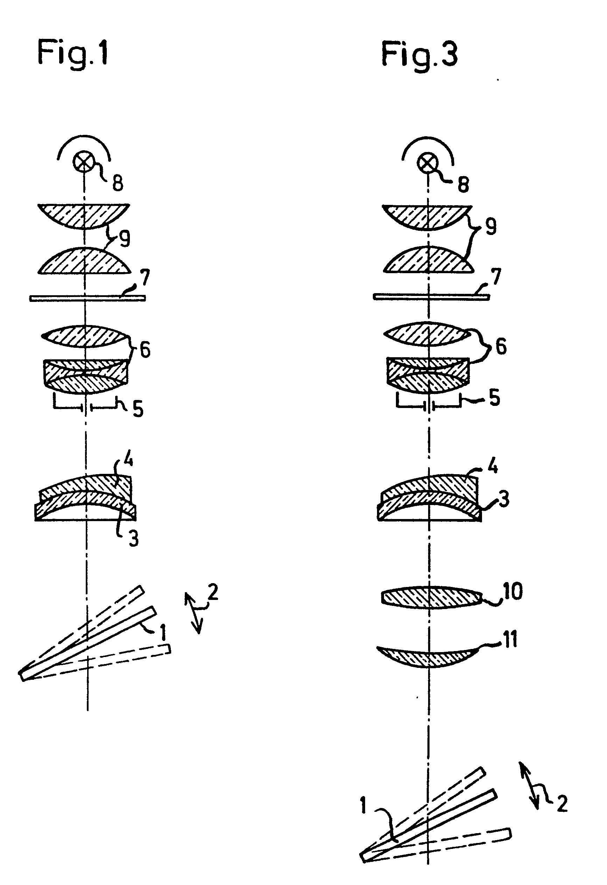

In Fig. 1 ist mit 1 eine Fläche bezeichnet, welche zur Auflage einer Testfigur dient. Diese Testfigur kann beispielsweise die aus Fig. 2a ersichtliche Gestalt eines Gitters haben. Die Fläche 1 ist geneigt und ihre Neigung ist, wie durch den Doppelpfeil 2 dargestellt, einstellbar. Mit 3 ist eine Auflage zur Halterung des Prüflings 4 bezeichnet. 5 bezeichnet eine Blende kleiner Öffnung, welche beispielsweise einen Durchmesser von 1,0 mm haben kann. Hinter dieser Blende ist ein Objektiv 6 angeordnet, das zusammen mit der Linse 4 ein Bild der Testfigur in der Bildebene 7 erzeugt. Dieses Testbild kann beispielsweise die aus Fig. 2b ersichtliche Gestalt haben, wenn der Prüfling 4 als Gleitsicht-Brillenlinse ausgebildet ist.

Das in der Bildebene 7 erzeugte Testbild wird fotographisch festgehalten, so dass es beispielsweise ein Negativbild der Testfigur darstellt.

Zur eigentlichen Prüfung wird nun das in der Bildebene 7 angeordnete Testbild über eine Lichtquelle 8 und einen Kondensor 9 durchleuchtet und mittels der Optik 6, 5, 4 auf die in der Fläche 1 angeordnete Testfigur abgebildet.

Bleibt die Musterlinse 4 im Strahlengang, so füllen die von dem in der Bildebene 7 angeordneten Negativbild der Testfigur erzeugten schwarzen Linien genau die Zwischenräume zwischen diesen Linien in der Testfigur der Fig. 2a aus. Es wird also in der Ebene 1 ein gleichmässig geschwärztes Bild beobachtet.

Wird nun das Musterglas 4 durch eine zu prüfende Linse ersetzt, so erscheinen in der Fläche 1 der Testfigur helle Lichtsäume, welche einen direkten Aufschluss über die örtliche Abweichung des Flächenbrechwertes des Prüflings vom Sollflächenbrechwert geben.

Im Ausführungsbeispiel der Fig. 3 ist zwischen der Testfigur und der Auflage 3 eine Kompensationsoptik angeordnet, welche aus einer Feldlinse 10 und einer Kompensationslinse 11 besteht. Diese Optik dient zur Kompensation eines vorbestimmten Teils der dioptrischen Wirkung des Prüflings.

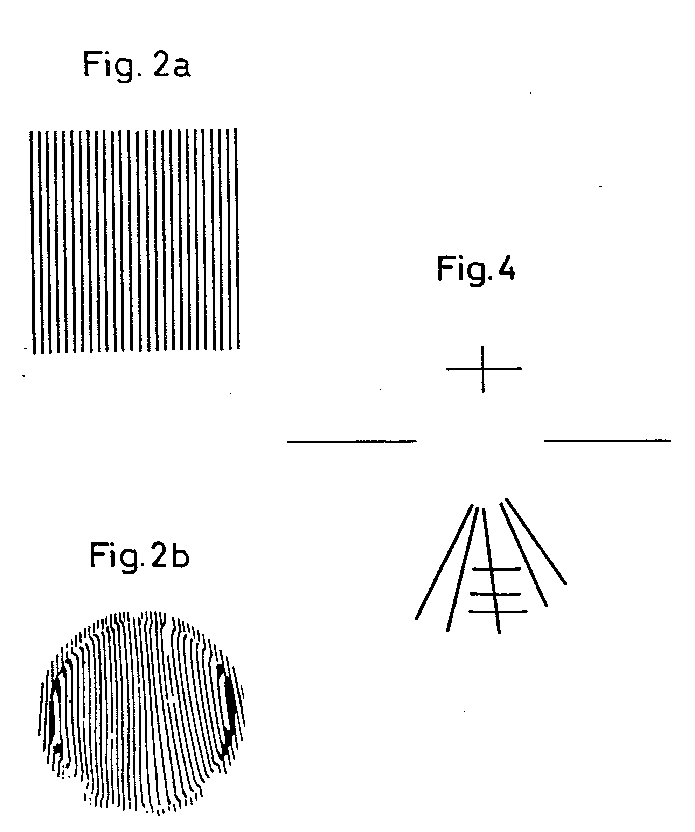

Die beschriebene und dargestellte Vorrichtung findet ganz besonders vorteilhaft Verwendung zur Prüfung von Gleitsicht-Brillenlinsen, insbesondere auch in der Fertigungskontrolle. Bei der Prüfung solcher Linsen wird zweckmässig eine Vorrichtung verwendet, welche dem Ausführungsbeispiel der Fig. 3 entspricht, wobei das Testbild beispielsweise die in Fig. 4 dargestellte Gestalt haben kann.

### Patentansprüche

1. Verfahren zur Prüfung von Linsen mit örtlich ungleichmässig verteilten Flächenbrechwerten, dadurch gekennzeichnet, dass zunächst über einen, eine Musterlinse enthaltenden Strahlengang ein Bild einer Testfigur erzeugt und photographisch festgehalten wird, dass danach dieses Testbild von dessen der Testfigur abgewandten Seite aus durchleuchtet und über den gleichen Strahlengang, in dem anstelle der Musterlinse die zu prüfende Linse angeordnet ist, auf die Testfigur abgebildet wird, und dass schliesslich aus der Abweichung zwischen der Testfigur und der Abbildung des Testbildes die örtliche Verteilung der Abweichung der Flächenbrechwerte des Prüflings vom jeweiligen Sollflächenbrechwert bestimmt wird.

2. Verfahren nach Anspruch 1, dadurch gekennzeichnet, dass das Testbild als Negativ der Testfigur festgehalten wird.

3. Verfahren nach Anspruch 2, dadurch gekennzeichnet, dass das Negativbild gefärbt wird.

4. Verfahren nach Anspruch 1, dadurch gekennzeichnet, dass als Testfigur ein gitterförmiges Linienmuster verwendet wird.

5. Vorrichtung zur Prüfung von Linsen mit örtlich ungleichmässig verteilten Flächenbrechwerten zur Ausführung des Verfahrens nach Anspruch 1, gekennzeichnet durch ein Hintereinanderschalten folgender Elemente: einer zur Halterung der Testfigur dienenden Fläche (1), einer zur Abbildung der Testfigur in eine Bildebene (7) dienenden Optik, welche eine Auflage (3) zur Halterung der Musterlinse (4) bzw. der zu prüfenden Linse und ein Objektiv (6) mit vorgeschalteter Blende (5) kleiner Apertur enthält und eines Beleuchtungssystems (8, 9) zur Durchleuchtung der Bildebene (7) von der der Testfigur abgewandten Seite aus.

6. Vorrichtung nach Anspruch 5, dadurch gekennzeichnet, dass zwischen der Testfigur und der Linsenauflage (3) eine Kompensationsoptik (10, 11) zur Kompensation eines vorbestimmten Teils der dioptrischen Wirkung des Prüflings angeordnet ist.

7. Vorrichtung nach Anspruch 5 und 6, dadurch gekennzeichnet, dass als Testfigur eine Strichfigur verwendet ist, deren Strichstärke der zulässigen Toleranzabweichung der zu prüfenden Linse entspricht.

8. Vorrichtung nach Anspruch 5 und 6, dadurch gekennzeichnet, dass die zur Aufnahme der Testfigur dienende Fläche (1) schräg zur optischen Achse des Abbildungsstrahlenganges angeordnet ist.

9. Vorrichtung nach Anspruch 8, dadurch gekennzeichnet, dass die Neigung der Fläche (1) einstellbar ist.

10. Verwendung der Vorrichtung nach Anspruch 5 und einem oder mehreren der folgenden zur Prüfung von Gleitsicht-Brillenlinsen.

## Revendications

1. Procédé pour contrôler des lentilles ayant des puissances de zones distribuées localement de façon irrégulière, caractérisé en ce que l'on produit d'abord, au moyen d'un faisceau contenant une lentille modèle, une image d'une figure de contrôle ou mire, que l'on enregistre photographiquement, on éclaire ensuite par transparence cette image de contrôle à partir de son côté opposé à la mire et on la reproduit sur la mire au moyen du même faisceau, mais dans lequel on a mis la lentille à contrôler à la place de la lentille modèle, et que, enfin, on détermine la distribution locale de l'écart des puissances de zones de la lentille contrôlée par rapport à la puissance prescrite de la zone concernée d'après l'écart entre la mire et la réproduction de l'image de contrôle.

2. Procédé selon la revendication 1, caractérisé en ce que l'on enregistre l'image de contrôle sous forme d'une image négative de la mire.

3. Procédé selon la revendication 2, caractérisé en ce que l'on colore l'image négative.

4. Procédé selon la revendication 1, caractérisé en ce que l'on utilise un motif de lignes en forme de treillis comme mire.

5. Dispositif pour contrôler des lentilles ayant des puissances de zones distribuées localement de façon irrégulière, pour la mise en œuvre du procédé selon la revendication 1, caractérisé par la disposition l'un derrière l'autre des éléments suivants: une surface (1) servant à tenir la mire, une optique destinée à former l'image de la mire dans un plan d'image (7) et qui contient un support (3) pour porter la lentille modèle (4) ou la lentille à contrôler et un objectif (6) procédé d'un diaphragme (5) de petite ouverture, ainsi qu'un système d'éclairage (8, 9) pour éclairer le plan d'image (7) partransparence à partir du côté opposé à la mire.

6. Dispositif selon la revendication 5, caractérisé en ce qu'une optique de compensation (10, 11) pour compenser une partie préfixée de l'effet dioptrique de la lentille contrôlée est disposée entre la mire et le support de lentille (3).

7. Dispositif selon les revendications 5 et 6, caractérisé en ce que la mire utilisée est une figure à traits dont la largeur des traits correspond à la tolérance de la lentille à contrôler.

8. Dispositif selon les revendications 5 et 6, caractérisé en ce que la surface (1) servant à recevoir la mire est disposée obliquement par rapport à l'axe optique du faisceau de reproduction.

9. Disposition selon la revendication 8, caractérisé en ce que l'inclinaison de la surface (1) est réglable.

10. Utilisation du dispositif selon la revendication 5 et une ou plusieurs des revendications suivantes pour le contrôle de verres de lunettes progressifs.

## Claims

1. Method for testing lenses having locally non-uniformly distributed surface powers, characterized in that first an image of a test pattern is produced and photographically recorded via a ray path which includes a master lens, that thereafter said test pattern image is transilluminated from its side turned away from the test pattern and is imaged onto the test pattern via said ray path, which now includes instead of the master lens the lens to be tested, and that finally the local distribution of the deviations of the surface powers of the test lens from the respective nominal surface powers is determined from the deviations between the test pattern image and the test pattern.

2. Method according to claim 1, characterized in that the test pattern image is recorded as a photographic negative of the test pattern.

3. Method according to claim 2, characterized in that said photographic negative is colored.

4. Method according to claim 1, characterized in that a latticed line pattern is used as test pattern.

5. Device for testing lenses having locally nonuniform distributed surface powers by carrying out the method of claim 1, characterized by serially connecting the following elements: a surface (1) for holding the test pattern, imaging optics for imaging the test pattern in an image plane (7), said optics containing a support (3) for holding the master lens or the lens to be tested and an objective in front of which a diaphragm (5) with a small aperture is provided, and as a further element an illuminating system (8, 9) for transilluminating said image plane (7) from the side turned away from the test pattern.

6. Device according to claim 5, characterized in that between the test pattern and said lens support (3) there is arranged a compensating optical system (10, 11) for compensating a predetermined part of the dioptric power of the lens being tested.

7. Device according to claims 5 and 6, characterized in that a line pattern is used as test pattern, the line thickness of said line pattern corresponding to the permissable tolerance deviation of the lens to be tested from the characteristics of said master lens.

8. Device according to claims 5 and 6, characterized in that the surface (1) for holding the test pattern is inclined to the optical axis of the imaging ray path.

9. Device according to claim 8, characterized in that the inclination of said surface (1) is adjustable.

10. Use of the device according to claim 5 and one or more of the following claims for testing mulifocal spectacle lenses with progressively varying dioptric power.

Fig.1

Fig.3

2 / 2

Fig. 2a

Fig.4

Fig.2b